# DEMANDE DE BREVET EUROPEEN

(11) **EP 1 088 690 A1**
(43) Date de publication de la demande: **04.04.2001**
(21) Numéro de dépôt: 00120975.8
(22) Date de dépôt: 27.09.2000
(51) Int. Cl.: B60H 1/00

(54) **Enchangeur de chaleur avec isolation, en particulier pour véhicule automobile**

(30) Priorité: 28.09.1999 FR 9912079
(71) Demandeur: VALEO CLIMATISATION, 78321 La Verrière (FR)
(72) Inventeur: Bachet, Isabelle, 91120 Palaiseau (FR); Naji, Said, 78990 Elancourt (FR)

(57) **Abrégé**

Un échangeur de chaleur pour le confort thermique d'un habitacle, notamment de véhicule automobile comporte, sur au moins une face latérale (2), un revêtement isolant acoustique (8) formé d'une couche de mousse (9) appliquée sur ladite face latérale et d'un film étanche (10) recouvrant extérieurement la couche de mousse.

## Description

L'invention concerne un échangeur de chaleur destiné au confort thermique d'un habitacle, notamment de véhicule automobile.

Un tel échangeur de chaleur est traversé par un flux d'air à traiter qui est ensuite envoyé dans l'habitacle. Il peut s'agir d'un échangeur de chaleur parcouru par un fluide chaud, généralement le fluide de refroidissement d'un moteur de véhicule automobile, pour assurer le chauffage du flux d'air. Il peut s'agir aussi d'un échangeur de chaleur parcouru par un fluide réfrigérant et fonctionnant soit en tant qu'un évaporateur pour refroidir le flux d'air, soit en tant qu'un condenseur pour chauffer alors le flux d'air.

L'échangeur de chaleur est habituellement logé dans un boîtier qui délimite en même temps un conduit pour le passage du flux d'air à traiter.

Un tel échangeur de chaleur engendre un certain nombre de bruits dus à la fois à la circulation du fluide dans l'échangeur et à celle du flux d'air qui traverse l'échangeur pour y être traité.

Ces bruits constituent une nuisance sonore préjudiciable au bon confort des passagers dans l'habitacle du véhicule.

Jusqu'à présent, aucune solution n'a été envisagée pour résoudre ce problème.

Il est connu certes de placer un isolant thermique, par exemple en polystyrène expansé, entre un échangeur du type évaporateur et le boîtier pour éviter des problèmes de condensation à l'extérieur de ce dernier.

Toutefois, ces solutions connues n'apportent pas de remède au problème des bruits engendrés par l'échangeur de chaleur.

L'invention a notamment pour but de remédier aux inconvénients précités.

Elle vise en particulier à procurer un échangeur de chaleur pour le confort thermique d'un habitacle, notamment de véhicule automobile, qui engendre un minimum de bruits.

L'invention vise aussi à procurer un tel échangeur de chaleur qui est muni d'un isolant acoustique susceptible d'être facilement mis en place.

L'invention propose à cet effet un échangeur de chaleur du type défini ci-dessus qui comporte, sur au moins une face latérale, un revêtement isolant acoustique formé d'une couche de mousse appliquée sur la face latérale et d'un film étanche recouvrant extérieurement la couche de mousse.

On procure ainsi un revêtement isolant acoustique, de structure souple, pouvant être aisément appliqué extérieurement sur l'une au moins des faces latérales de l'échangeur de chaleur.

Par l'expression "face latérale", on entend désigner ici une face rayonnante de l'échangeur de chaleur, qui n'est pas traversée par le flux d'air à traiter.

Habituellement, un échangeur de chaleur comporte quatre faces latérales rayonnantes et deux autres faces, généralement appelées "grandes faces" qui servent respectivement à l'entrée et à la sortie du flux d'air.

D'autres caractéristiques complémentaires ou alternatives de l'invention sont les suivantes :
- la couche de mousse est en polyuréthanne ;
- la couche de mousse est imprégnée et à pores ouverts ;
- la couche de mousse a une densité comprise entre 50 et 100 kg/m³ ;
- la couche de mousse est collée sur la face latérale de l'échangeur de chaleur ;
- la couche de mousse est munie d'un adhésif ;
- le film est formé d'un matériau étanche à l'eau et présentant une tenue mécanique dans un intervalle de température de moins 40°C à + 120°C ;
- le film est en polyuréthanne ;
- le film comporte des bords qui s'étendent au-delà de la couche de mousse et qui sont soudés ;
- ces bords soudés sont collés sur la face latérale de l'échangeur de chaleur; et
- le revêtement isolant acoustique présente une épaisseur comprise entre 5 et 10 mm.

Dans la description qui suit, faite seulement à titre d'exemple, on se réfère aux dessins annexés, sur lesquels :
- la figure 1 est une vue schématique en perspective d'un échangeur de chaleur, dans l'exemple un évaporateur de climatisation, qui est muni d'un revêtement isolant selon l'invention; et
- la figure 2 est une vue en coupe, à échelle agrandie, d'une face latérale de l'évaporateur et du revêtement isolant qu'elle comporte.

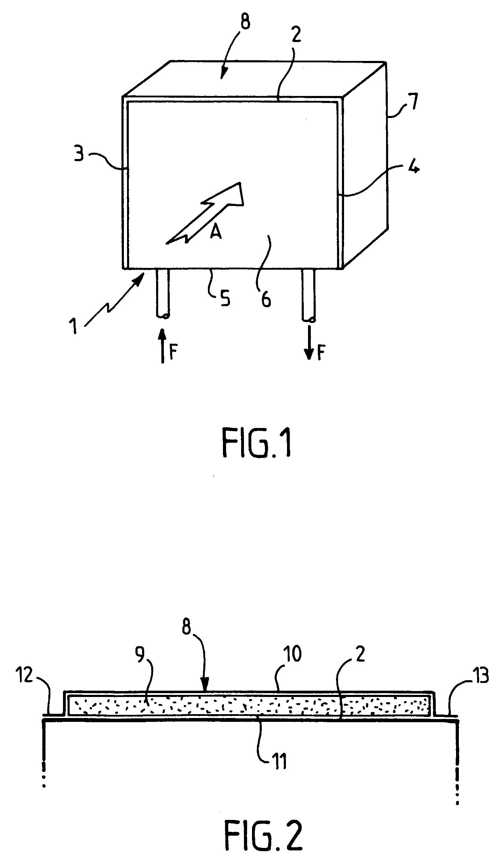

On se réfère d'abord à la figure 1 qui représente un évaporateur 1 propre à faire partie d'un circuit de climatisation (non représenté), en particulier pour un véhicule automobile.

L'évaporateur 1 est délimité par quatre faces latérales 2, 3, 4 et 5, encore appelées faces rayonnantes, ainsi que par une face d'entrée 6 et une face de sortie 7. Cet évaporateur est propre à être traversé par un flux d'air (flèche A) qui pénètre par la face d'entrée 6 et en ressort par la face de sortie 7 après avoir été refroidi par échange thermique avec un fluide réfrigérant F qui circule dans le circuit et s'évapore lors de son passage dans l'évaporateur en absorbant ainsi de la chaleur.

Un évaporateur de ce type engendre des bruits dus à la circulation du fluide réfrigérant F et à celle du flux d'air A.

Pour remédier à cet inconvénient, l'invention prévoit de munir l'une au moins des faces latérales 2, 3, 4 et 5 d'un revêtement isolant acoustique 8. Dans l'exemple, ce revêtement est appliqué sur trois faces latérales, à savoir les faces 2, 3 et 4.

On se réfère maintenant à la figure 2 qui montre le revêtement isolant acoustique 8 appliqué sur la face 2 de l'évaporateur. Il s'agit d'un revêtement souple qui peut être découpé sous forme d'une plaque correspondant à chaque fois aux dimensions d'une face latérale de l'évaporateur, ou bien à partir d'un ruban que l'on déroule et applique sur les faces latérales à protéger.

Le revêtement isolant acoustique 8 est formé d'une couche de mousse 9 appliquée par collage sur la face latérale 2 et d'un film étanche 10 recouvrant extérieurement la couche de mousse. L'épaisseur totale du revêtement est comprise entre 5 et 10 mm.

Dans l'exemple représenté, on utilise une couche de mousse en polyuréthanne qui est imprégnée par un copolymère de vinylidène et qui possède des pores ouverts. Cette couche de mousse possède avantageusement une densité comprise entre 50 et 100 kg/m³.

La couche de mousse 9 est munie, à l'opposé du film 10, d'une couche d'adhésif 11 qui permet de coller et de placer le revêtement sur la face latérale de l'évaporateur. On peut utiliser pour cela tout matériau adhésif, compatible avec une mousse de polyuréthanne. Cette couche d'adhésif est de préférence recouverte au préalable d'une pellicule pelable anti-adhérente, par exemple du type silicone, qui est détachée avant la mise en place du revêtement sur l'évaporateur.

Le film 10 est un film protecteur, étanche à l'eau, solidaire de la couche de mousse 9 et propre à empêcher la pénétration d'eau ou autres agents dans la mousse.

Dans l'exemple, on utilise un film en polyuréthanne qui possède des bords 12 et 13 qui dépassent la couche de mousse et sont soudés. Ces bords sont collés sur la face latérale 2. Les bords du film 8 sont ainsi étanchés pour empêcher la pénétration d'eau dans la couche de mousse.

Le film 10 est réalisé dans un polyuréthanne possédant une tenue mécanique dans un intervalle de température de - 40°C à + 120°C. Cela signifie que ce matériau ne perd pas ses propriétés mécaniques dans cet intervalle de température.

On comprendra que le revêtement isolant peut être facilement mis en place sur chacune des faces latérales à revêtir.

Lorsque l'évaporateur est ainsi muni d'un revêtement isolant acoustique selon l'invention, on obtient une bonne performance acoustique, à savoir 2 à 3 dB à partir de 1000 Hz.

L'isolant acoustique possède une étanchéité parfaite à l'eau, une fois placé sur l'évaporateur, ainsi qu'une bonne tenue en température dans un intervalle de - 40°C à + 120° C.

Par ailleurs, un tel revêtement possède une bonne tenue à l'environnement et n'engendre pas d'odeurs.

Il est à signaler en outre que cet isolant acoustique constitue en même temps un bon isolant thermique.

Bien entendu, l'invention n'est pas limitée à la forme de réalisation décrite précédemment à titre d'exemple et s'étend à d'autres variantes.

Ainsi l'isolant acoustique pourrait notamment être appliqué sur un échangeur de chaleur traversé par un fluide chaud pour chauffer le flux d'air à traiter.

## Revendications

1. Echangeur de chaleur pour le confort thermique d'un habitacle, notamment de véhicule automobile,
caractérisé en ce qu'il comporte, sur au moins une face latérale (2, 3, 4, 5), un revêtement isolant acoustique (8) formé d'une couche de mousse (9) appliquée sur ladite face latérale et d'un film étanche (10) recouvrant extérieurement la couche de mousse.

2. Echangeur de chaleur selon la revendication 1, caractérisé en ce que la couche de mousse (9) est en polyuréthanne.

3. Echangeur de chaleur selon l'une des revendications 1 et 2, caractérisé en ce que la couche de mousse (9) est imprégnée et à pores ouverts.

4. Echangeur de chaleur selon l'une des revendications 1 à 3, caractérisé en ce que la couche de mousse (9) a une densité comprise entre 50 et 100kg/m³.

5. Echangeur de chaleur selon l'une des revendications 1 à 4, caractérisé en ce que la couche de mousse (9) est collée sur la face latérale (2, 3, 4, 5) de l'échangeur.

6. Echangeur de chaleur selon la revendication 5, caractérisé en ce que la couche de mousse (9) est munie d'un adhésif (11).

7. Echangeur de chaleur selon l'une des revendications 1 à 6, caractérisé en ce que le film (10) est formé d'un matériau étanche à l'eau et présentant une tenue mécanique dans un intervalle de température de - 40°C à + 120°C.

8. Echangeur de chaleur selon l'une des revendications 1 à 7, caractérisé en ce que le film (10) est en polyuréthanne.

9. Echangeur de chaleur selon l'une des revendications 1 à 8, caractérisé en ce que le film (10) comporte des bords (12, 13) qui s'étendent au delà de la couche de mousse (9) et qui sont soudés sur la face latérale de l'évaporateur.

10. Echangeur de chaleur selon la revendication 9, caractérisé en ce que les bords soudés (12, 13) sont collés sur la face latérale de l'évaporateur.

11. Echangeur de chaleur selon l'une des revendications 1 à 10, caractérisé en ce que le revêtement isolant acoustique (8) présente une épaisseur comprise entre 5 et 10 mm.
